(19) Europäisches Patentamt
European Patent Office
Office européen des brevets

(11) EP 3 725 838 A1

(12) **EUROPEAN PATENT APPLICATION**
published in accordance with Art. 153(4) EPC

(43) Date of publication:
**21.10.2020 Bulletin 2020/43**

(21) Application number: **18888522.2**

(22) Date of filing: **11.12.2018**

(51) Int Cl.:
***C08L 7/00*** *(2006.01)* ***B60C 1/00*** *(2006.01)*
***C08K 3/04*** *(2006.01)* ***C08K 3/22*** *(2006.01)*
***C08K 3/36*** *(2006.01)* ***C08K 5/092*** *(2006.01)*
***C08K 5/098*** *(2006.01)* ***C08K 5/24*** *(2006.01)*

(86) International application number:
**PCT/JP2018/045503**

(87) International publication number:
**WO 2019/117143 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.12.2017 JP 2017238055**

(71) Applicant: **Bridgestone Corporation**
**Chuo-Ku**
**Tokyo 104-8340 (JP)**

(72) Inventor: **IKUTA, Akifumi**
**Tokyo 104-8340 (JP)**

(74) Representative: **Oxley, Robin John George**
**Marks & Clerk LLP**
**15 Fetter Lane**
**London EC4A 1BW (GB)**

(54) **RUBBER COMPOSITION FOR TIRE TREAD AND TIRE**

(57) The present invention relates to a rubber composition for a tire tread comprising rubber components comprising 70 mass% or more of natural rubber, at least one selected from the group consisting of zinc oxide, a fatty acid, and a fatty acid zinc in a total amount of 2 parts by mass or more and less than 13 parts by mass relative to 100 parts by mass of the rubber components, a filler comprising carbon black, and a carbon black dispersant, wherein a vulcanized rubber of the rubber composition has an integrated value of white areas with a particle size of 32 μm or more, of 15% or less of the integrated value of white areas with a particle size of 3 to 57 μm, in measurement of a cross section using a dispergrader in accordance with ASTM D7723.

EP 3 725 838 A1

**Description**

Technical Field

The present invention relates to a rubber composition for a tire tread and a tire.

Background Art

In the case of applying a tread rubber, which is the only portion of a tire in contact with a road surface, to a heavy load tire, further improvement in abrasion resistance and resistance to heat generation has become a very important issue in recent years. In order to overcome the issue, research and development on the tread rubber have been made and practical use thereof has been developed.

In PTL 1, a rubber composition for a tire tread for use in a heavy load tire is disclosed for a purpose of improving both of the abrasion resistance and the resistance to heat generation in parallel. The rubber composition for a tire tread is made of a rubber composition containing zinc oxide, a fatty acid, and/or a fatty acid zinc, having a melting point of the fatty acid zinc contained in a vulcanized rubber equal to or less than a specified temperature (average melting point per weight of 105°C or less).

Citation List

Patent Literature

PTL1: JP 2010-265431 A

Summary of Invention

Technical Problem

The rubber composition for a tire tread of PTL1 is excellent particularly as a rubber composition for a heavy load tire, with further improved abrasion resistance and resistance to heat generation. However, in the case of application to an aircraft tire, to which a higher load is applied, a further challenge needs to be overcome in addition to the abrasion resistance and the resistance to heat generation.

The tread rubber of an aircraft tire comes into contact with grooves disposed on a runway at a high speed under a heavy load during landing. Due to this, a cut wound referred to as a Chevron cut with a pinecone shape or a burr shape occurs in the tread rubber of the tire in some cases, so that there is room for further improvement to achieve a high crack resistance required.

Accordingly, the present invention has been made to solve the problem. An object of the present invention is to provide a tire having not only improved abrasion resistance and resistance to heat generation but also excellent crack resistance, and a rubber composition for a tire tread from which the tire can be obtained.

Solution to Problem

Through extensive study on the problem, the present inventor has found that an aggregate present in a vulcanized rubber made of rubber composition for a tire tread makes a fracture nucleus and a crack tends to occur from the aggregate as a starting point.

The present inventor has also found that a rubber composition for a tire tread containing a natural rubber in a specified amount or more, containing a total of at least one selected from the group consisting of zinc oxide, a fatty acid, and a fatty acid zinc in a specified amount or more, and containing a carbon black dispersant can suppress the formation of aggregates, so that the present invention has been accomplished.

In other words, the present invention is as follows.

[1] A rubber composition for a tire tread comprising rubber components comprising 70 mass% or more of natural rubber, at least one selected from the group consisting of zinc oxide, a fatty acid, and a fatty acid zinc in a total amount of 2 parts by mass or more and less than 13 parts by mass relative to 100 parts by mass of the rubber components, a filler comprising carbon black, and a carbon black dispersant, wherein a vulcanized rubber of the rubber composition has an integrated value of white areas with a particle size of 32 μm or more, of 15% or less of the integrated value of white areas with a particle size of 3 to 57 μm, in measurement of a cross section using a dispergrader in accordance with ASTM D7723.

[2] The rubber composition for a tire tread according to the above [1], wherein the value of (White area %) × (Integrated value of white area with a particle size of 32 μm or more)/(Integrated value of white area with a particle size of 3 to 57 μm) is 0.2% or less in the measurement of a cross section of the vulcanized rubber.

[3] The rubber composition for a tire tread according to the above [1] or [2], wherein a content of the filler is 1 to 60 parts by mass relative to 100 parts by mass of the rubber components, and the filler comprises 1 to 20 mass% of inorganic particles having a cetyltrimethylammonium bromide adsorption specific surface area (CTAB) in a range of 50 to 350 $m^2/g$.

[4] The rubber composition for a tire tread according to the above [3], wherein the inorganic particles comprise silica.

[5] The rubber composition for a tire tread according to any one of the above [1] to [4], wherein a content of the fatty acid zinc is 1 part by mass or more relative to 100 parts by mass of the rubber components.

[6] The rubber composition for a tire tread according to any one of the above [1] to [5], wherein the carbon black dispersant is a hydrazide compound.

[7] The rubber composition for a tire tread according to the above [6], wherein a content of the hydrazide compound is 0.1 to 2.5 parts by mass relative to 100 parts by mass of the rubber components.

[8] The rubber composition for a tire tread according to any one of the above [1] to [7], wherein a mass ratio of a content of the zinc oxide b to a content of the fatty acid zinc a, b/a, is 1.0 to 3.0.

[9] The rubber composition for a tire tread according to any one of the above [1] to [8], wherein a mass ratio of an amount of zinc d to an amount of fatty acid c comprised in the vulcanized rubber, d/c, is 1.1 or more and 2.0 or less.

[10] The rubber composition for a tire tread according to any one of the above [1] to [9], wherein a content of the natural rubber in the rubber components is 70 to 95 mass%.

[11] A tire using a tread of the rubber composition for a tire tread according to any one of the above [1] to [10].

## Advantageous Effects of Invention

According to the present invention, a tire having not only improved abrasion resistance and resistance to heat generation but also excellent crack resistance, and a rubber composition for a tire tread from which the tire can be obtained, can be provided.

## Description of Embodiments

### [Rubber composition for tire tread]

A rubber composition for a tire tread of the present invention comprises a rubber components comprising 70 mass% or more of natural rubber, at least one selected from the group consisting of zinc oxide, a fatty acid, a fatty acid zinc in a total amount of 2 parts by mass or more and less than 13 parts by mass relative to 100 parts by mass of the rubber components, a filler comprising carbon black, and a carbon black dispersant.

Also, a vulcanized rubber of the rubber composition for a tire tread of the present invention has an integrated value of white areas with a particle size of 32 μm or more, of 15% or less, preferably 12% or less, more preferably 10% or less, of the integrated value of white areas with a particle size of 3 to 57 μm, in measurement of a cross section using a dispergrader in accordance with ASTM D7723.

Further, in the measurement of a cross section of the vulcanized rubber of the rubber composition for a tire tread of the present invention has a value of (White area %) × (Integrated value of white area with a particle size of 32 μm or more)/(Integrated value of white area with a particle size of 3 to 57 μm) of preferably 0.2% or less, more preferably 0.18% or less, still more preferably 0.15% or less.

### [Aggregate]

In the present invention, an aggregate refers to an aggregated substance having a particle size of 3 μm or more present in a vulcanized rubber.

In the present specification, "aggregated substance" refers to aggregated one or two or more of components of the rubber composition constituting the vulcanized rubber, and specific examples thereof include an aggregated substance of a fatty acid zinc, an aggregated substance of filler such as carbon black, and an aggregated substance of crosslinking agents and other components.

The rubber composition for a tire tread of the present invention is described as follows.

### [Rubber components]

The rubber composition for a tire tread of the present invention comprises rubber components comprising a

natural rubber.

The content of the natural rubber in the rubber components is 70 mass% or more.

A content of the natural rubber of less than the above range makes it difficult not only to improve the abrasion resistance and the resistance to heat generation of a tire but also to exhibit an excellent crack resistance in some cases.

Also, from the viewpoint of the abrasion resistance of a tire, the content of the natural rubber in the rubber components is preferably less than 100 mass%, or specifically preferably 70 to 95 mass%, more preferably 80 to 95 mass%, more preferably more than 80 mass% and 95 mass% or less, and still more preferably 85 to 93 mass%.

Examples of the rubber components other than a natural rubber (NR) include a butadiene rubber (polybutadiene, BR), an isoprene rubber (IR), a styrene-butadiene rubber (SBR), an acrylonitrile-butadiene rubber (NBR), a chloroprene rubber (CR), a butyl rubber (IIR), a halogenated butyl rubber (X-IIR), an ethylene-propylene rubber (EPM), an ethylene-propylene-diene copolymer rubber (EPDM), and a styrene-isoprene-butadiene copolymer rubber (SIBR).

[Filler]

The rubber composition for a tire tread of the present invention comprises a filler.

The content of the filler in the rubber composition is preferably 1 to 60 parts by mass, more preferably 30 to 50 parts by mass, still more preferably 40 to 50 parts by mass, relative to 100 parts by mass of the rubber components.

A content of the filler in the above range makes it easy not only to improve the abrasion resistance and the resistance to heat generation of a tire but also to exhibit an excellent crack resistance.

<Carbon black>

The filler comprises at least carbon black. The content of carbon black in the filler is preferably 60 to 100 mass%, more preferably 70 to 100 mass%, still more preferably 80 to 100 mass%.

Also, the content of carbon black in the rubber composition is preferably 40 to 60 parts by mass, more preferably 40 to 55 parts by mass, still more preferably 40 to 50 parts by mass, relative to 100 parts by mass of the rubber components.

A content of the carbon black in the above range makes it easy not only to improve the abrasion resistance and the resistance to heat generation of a tire but also to exhibit an excellent crack resistance.

The carbon black is not particularly limited as long as it is usable as reinforcing filler for conventional rubber, and examples thereof include GPF (N660), FEF (N550), SRF (N774), HAF (N330), ISAF (N220), ISAF-HS (N234), and SAF (N110).

The carbon black is available as a commercial product, and examples thereof include a product named "VULCAN 6 SHOBLACK" manufactured by Cabot Corporation.

<Inorganic particle>

It is preferable that the filler further comprise inorganic particles having a cetyltrimethylammonium bromide adsorption specific surface area (CTAB) in the range of 50 to 350 $m^2/g$. The content of the inorganic particles in the filler is preferably 1 to 20 mass%, more preferably 5 to 20 mass%, still more preferably 10 to 20 mass%.

Also, the content of the inorganic particles in the rubber composition is preferably 1 to 20 parts by mass, more preferably 1 to 15 parts by mass, still more preferably 5 to 15 parts by mass, relative to 100 parts by mass of the rubber components.

A content of the inorganic particles in the above range makes it easy not only to improve the abrasion resistance and the resistance to heat generation of a tire but also to exhibit an excellent crack resistance.

The inorganic particles to be contained in the filler has a cetyltrimethylammonium bromide adsorption specific surface area (CTAB) preferably in the range of 50 to 350 $m^2/g$, more preferably in the range of 70 to 330 $m^2/g$, still more preferably in the range of 90 to 300 $m^2/g$, further preferably in the range of 130 to 260 $m^2/g$, particularly preferably in the range of 140 to 200 $m^2/g$.

A cetyltrimethylammonium bromide adsorption specific surface area (CTAB) of the inorganic particles in the above range makes it easy not only to improve the abrasion resistance and the resistance to heat generation of a tire but also to exhibit an excellent crack resistance.

The CTAB is preferably in the range of 150 to 180 $m^2/g$ from the viewpoint of long-term abrasion resistance.

The inorganic particles having a cetyltrimethylammonium bromide adsorption specific surface area (CTAB) in the range of 50 to 350 $m^2/g$ are not particularly limited, and examples thereof include silica, alumina, and titania. Among these, silica is preferably used because the effect of crack propagation resistance to suppress the propagation of cracks is easily exhibited.

The inorganic particles to be contained in the filler have a BET surface area preferably in the range of 40 to 350 $m^2/g$, more preferably in the range of 80 to 320 $m^2/g$, still more preferably in the range of 150 to 300 $m^2$, further

preferably in the range of 170 to 290 $m^2/g$, furthermore preferably in the range of 190 to 280 $m^2/g$, furthermore preferably in the range of 190 to 250 $m^2/g$, particularly preferably in the range of 190 to 230 $m^2/g$.

A BET surface area of the inorganic particles in the above range makes it easy not only to improve the abrasion resistance and the resistance to heat generation of a tire but also to exhibit an excellent crack resistance.

A silica having a cetyltrimethylammonium bromide adsorption specific surface area (CTAB) in the range of 50 to 350 $m^2/g$ is also available as a commercial product, and examples thereof include a trade named "Nipsil KQ" manufactured by Tosoh Silica Corporation, a trade named "Nipsil AQ" manufactured by Tosoh Silica Corporation, and a trade named "Ultra Seal 9000 GR" manufactured by Evonik Industries AG.

<Silane coupling agent>

In the case of using silica as the inorganic particles having a cetyltrimethylammonium bromide adsorption specific surface area (CTAB) in the range of 50 to 350 $m^2/g$, a silane coupling agent may be used from the viewpoint of enhancing the dispersibility of silica in the rubber composition.

The content of the silane coupling agent in the rubber composition is preferably 1 to 20 parts by mass, more preferably 1 to 15 parts by mass, still more preferably 5 to 15 parts by mass, relative to 100 parts by mass of silica.

With a content of the silane coupling agent in the range, the effect of crack propagation resistance possessed by silica is suitably exhibited.

The silane coupling agent is not particularly limited, and examples thereof include bis(3-triethoxysilylpropyl)polysulfide, γ-mercaptopropyltriethoxysilane, γ-aminopropyltriethoxysilane, N-phenyl-γ-aminopropyltrimethoxysilane, and N-β-(aminoethyl)-γ-aminopropyltrimethoxysilane.

The silane coupling agent is also available as a commercial product, and examples thereof include a trade named "ABC-856" manufactured by Shin-Etsu Chemical Co., Ltd.

[Zinc oxide, fatty acid, and fatty acid zinc]

The rubber composition for a tire tread of the present invention comprises at least one selected from the group consisting of zinc oxide, a fatty acid, and a fatty acid zinc.

The total content of at least one selected from the group consisting of zinc oxide, a fatty acid and a fatty acid zinc is 2 parts by mass or more and less than 13 parts by mass, preferably 2 parts by mass or more and less than 8 parts by mass, more preferably 2 parts by mass or more and less than 6 parts by mass, relative to 100 parts by mass of the rubber components.

With a total content of at least one selected from the group consisting of zinc oxide, a fatty acid, and a fatty acid zinc of less than the above range, the effect of suppressing the formation of an aggregate is not sufficiently exhibited, and the abrasion resistance and crack resistance of a tire may be inferior.

On the other hand, with a total content of at least one selected from the group consisting of zinc oxide, a fatty acid and a fatty acid zinc exceeding the above range, aggregated substances resulting from at least one selected from the group consisting of zinc oxide, a fatty acid and a fatty acid zinc are easily formed, so that the abrasion resistance and the crack resistance may be inferior.

<Zinc oxide>

The rubber composition for a tire tread comprises zinc oxide.

In the present specification, "zinc oxide" refers to an oxide of zinc represented by a chemical formula ZnO.

The zinc oxide is not particularly limited, and examples thereof include a zinc flower, an active zinc oxide (active zinc flower).

The content of zinc oxide in the rubber composition is preferably 0.5 to 8 parts by mass, more preferably 2 to 8 parts by mass, still more preferably 2 to 6 parts by mass, relative to 100 parts by mass of the rubber components, from the viewpoint of acceleration of vulcanization.

The specific surface area of zinc oxide is preferably 2 to 120 $m^2/g$, more preferably 10 to 120 $m^2/g$, still more preferably 20 to 120 $m^2/g$, from the viewpoint of suppressing formation of aggregates.

<Fatty acid>

The rubber composition for a tire tread comprises a fatty acid.

In the present specification, "fatty acid" refers to a compound itself represented by a chemical formula R-COOH, not referring to a fatty acid component constituting a fatty acid zinc described below.

The fatty acid is preferably a straight-chain or branched-chain fatty acid having 8 or more carbon atoms,

particularly preferably a straight-chain fatty acid having 8 to 18 carbon atoms.

The fatty acid may be a saturated fatty acid with an aliphatic group R having only single bonds. Examples of the saturated fatty acid include caprylic acid (C8), pelargonic acid (C9), capric acid (C10), lauric acid (C12), myristic acid (C14), pentadecylic acid (C15), palmitic acid (C16), palmitoleic acid (C16), margaric acid (C17), and stearic acid (C18).

The fatty acid may also be an unsaturated fatty acid having a double bond or a triple bond in the aliphatic group R. Examples of the unsaturated fatty acid include a monounsaturated fatty acid such as myristoleic acid, palmitoleic acid, sapienic acid, oleic acid, elaidic acid, vacenic acid, gadoleic acid, eicosenic acid, erucic acid, and nervonic acid; and a diunsaturated fatty acid such as linoleic acid, eicosadienoic acid, and docosadienoic acid.

The content of the fatty acid in the rubber composition is preferably 5 parts by mass or less, more preferably 4 parts by mass or less, still more preferably 3 parts by mass or less, relative to 100 parts by mass of the rubber components, from the viewpoint of suppressing the enlargement of aggregates.

The average molecular weight of the fatty acid is preferably 280 or less, more preferably 250 or less, still more preferably 230 or less, from the viewpoint of suppressing the enlargement of aggregates.

<Fatty acid zinc>

The rubber composition for a tire tread comprises a fatty acid zinc.

In the present specification, "fatty acid zinc" refers to a compound itself represented by a chemical formula R-COOZn.

The fatty acid component constituting the fatty acid zinc is preferably a straight-chain or branched-chain fatty acid having 8 or more carbon atoms, particularly preferably a straight-chain fatty acid having 8 to 18 carbon atoms.

The fatty acid component may be a saturated fatty acid with an aliphatic group R having only single bonds. Examples of the saturated fatty acid include caprylic acid (C8), pelargonic acid (C9), capric acid (C10), lauric acid (C12), myristic acid (C14), pentadecylic acid (C15), palmitic acid (C16), palmitoleic acid (C16), margaric acid (C17), and stearic acid (C18).

The fatty acid component may also be an unsaturated fatty acid having a double bond or a triple bond in the aliphatic group R constituting the fatty acid zinc. Examples of the unsaturated fatty acid include a monounsaturated fatty acid such as myristoleic acid, palmitoleic acid, sapienic acid, oleic acid, elaidic acid, vacenic acid, gadoleic acid, eicosenic acid, erucic acid, and nervonic acid; and a diunsaturated fatty acid such as linoleic acid, eicosadienoic acid, and docosadienoic acid.

The content of the fatty acid zinc in the rubber composition is preferably 1 part by mass or more, more preferably 1.5 parts by mass or more, still more preferably 2 parts by mass or more, relative to 100 parts by mass of the rubber components, from the viewpoint of suppressing the enlargement of aggregates.

The average molecular weight of the fatty acid component constituting the fatty acid zinc is preferably 280 or less, more preferably 250 or less, still more preferably 230 or less, from the viewpoint of suppressing the enlargement of aggregates.

The mass ratio of the content of the zinc oxide b to the content of the fatty acid zinc a, b/a, is preferably 1.0 to 3.0, more preferably 1.0 to 2.0, still more preferably 1.5 to 2.0, from the viewpoint of suppressing the enlargement of aggregates.

The rubber composition for a tire tread of the present invention is prepared by a predetermined method, and the prepared rubber composition for a tire tread is vulcanized under predetermined vulcanization conditions to obtain a vulcanized rubber.

In the present invention, a predetermined mass ratio between the amount of fatty acid c and the amount of zinc d makes it easy to exhibit the effect of suppressing the formation of aggregates and makes it easy not only to improve the abrasion resistance and the resistance to heat generation of a tire but also to exhibit an excellent crack resistance.

The mass ratio of the amount of zinc d to the amount of fatty acid c contained in a vulcanized rubber, d/c, is preferably 1.1 or more and 2.0 or less, more preferably 1.2 or more and 1.9 or less, still more preferably 1.3 or more and 1.8 or less.

With a mass ratio of the amount of zinc d to the amount of fatty acid c, d/c, of less than the above range, an aggregate is easily formed to make a fracture nucleus, so that a crack may easily occur from the aggregate as a starting point due to the excessively large amount of fatty acid c relative to the amount of zinc d.

On the other hand, with a mass ratio of the amount of zinc d to the amount of fatty acid c, d/c, of more than the above range, the vulcanization reaction insufficiently proceeds, so that various physical properties designed as vulcanized rubber may not be obtained due to the excessively small amount of fatty acid c relative to the amount of zinc d.

In the present specification, the amount of fatty acid c and the amount of zinc d contained in a vulcanized rubber are values calculated by equations 1 and 2 shown below, respectively.

Equation 1:

$$\text{Amount of fatty acid c} = (\text{content of fatty acid}) + (\text{content of fatty acid zinc}) \times 0.87$$

Equation 2:

$$\text{Amount of zinc d} = (\text{content of zinc oxide}) \times 0.8 + (\text{content of fatty acid zinc}) \times 0.13$$

Note that each content of zinc oxide, fatty acid, and fatty acid zinc refers to the amount contained in the rubber composition for a tire tread.

[Carbon black dispersant]

The rubber composition for a tire tread of the present invention comprises a carbon black dispersant.

The carbon black dispersant is not particularly limited as long as it has a function of enhancing the dispersibility of carbon black in the rubber composition, and examples thereof include a hydrazide compound, an unsaturated fatty acid ester and an unsaturated alcohol ester (refer to JP 04-20579 A). Among these, a hydrazide compound is preferred from the viewpoint of efficiently dispersing carbon black, with an intramolecular functional group having high affinity not only with carbon black but also with the rubber components.

The hydrazide compound for use as a carbon black dispersant is not particularly limited, and a compound represented by the following formula (I) or formula (II) is preferred.

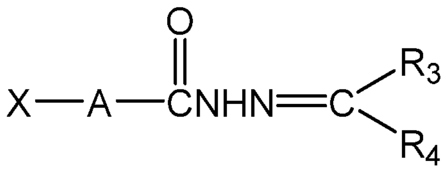 (I)

In the present specification, in the above formula (I), A is at least one selected from the group consisting of an aromatic ring, a substituted or unsubstituted hydantoin ring, and a saturated or unsaturated straight-chain hydrocarbon having 1 to 18 carbon atoms.

X is at least one selected from the group consisting of a group represented by the following formula (I'), a hydroxy group, and an amino group.

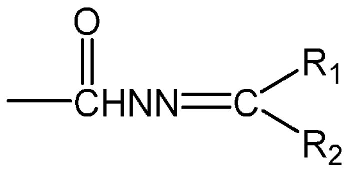 (I')

Also, in the above formula (I) and the above formula (I'), $R_1$ to $R_4$ are ones selected from the group consisting of a hydrogen atom, a straight-chain or branched alkyl group having 1 to 18 carbon atoms, a cycloalkyl group, and an aromatic ring, which may be the same or different from each other.

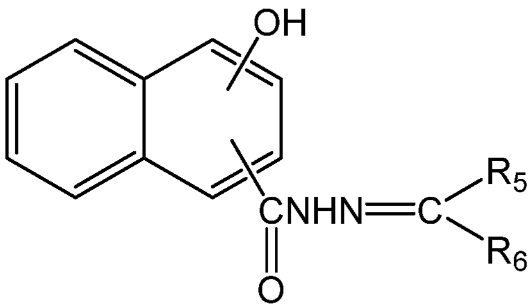

(II)

In the above formula (II), $R_5$ to $R_6$ are at least one selected from the group consisting of a straight-chain or branched alkyl group having 1 to 18 carbon atoms, a cycloalkyl group, and an aryl group, and these groups may contain an O, S or N atom.

Specific examples of the compound represented by the above formula (I) include $N^2$,$N^4$-di (1-methylethylidene)isophthalic dihydrazide, $N^2$,$N^4$-di(1-methylpropylidene)isophthalic dihydrazide, $N^2$,$N^4$-di(1,3-dimethylbutylidene)isophthalic dihydrazide, N'-(1-methylethylidene)salicylic hydrazide, N'-(1-methylpropylidene)salicylic hydrazide, N'-(1-methylbutylidene)salicylic hydrazide, N'-(1,3-dimethylbutylidene)salicylic hydrazide, and N'-(2-furylmethylene)salicylic hydrazide.

Also, specific examples of the compound represented by the above formula (II) include 1-hydroxy-N'-(1-methylethylidene)-2-naphthoic hydrazide, 1-hydroxy-N'-(1-methyl)propylidene)-2-naphthoic hydrazide, 1-hydroxy-N'-(1-methylbutylidene)-2-naphthoic hydrazide, 1-hydroxy-N'-(1,3-dimethylbutylidene)-2-naphthoic hydrazide, 1-hydroxy-N'-(2-furylmethylene)-2-naphthoic hydrazide, 3-hydroxy-N'-(1-methylethylidene)-2-naphthoic hydrazide, 3-hydroxy-N'-(1-methylpropylidene)-2-naphthoic hydrazide, 3-hydroxy-N'-(1-methylbutylidene)-2-naphthoic hydrazide, 3-hydroxy-N'-(1,3-dimethyl-butylidene)-2-naphthoic hydrazide, and 3-hydroxy-N'-(2-furylmethylene)-2-naphthoic hydrazide.

The chemical compound represented by the above formula (I) or formula (II) can be easily synthesized by heating to cause a reaction of 3-hydroxy-2-naphthoic hydrazide as a raw material with acetone, methyl isobutyl ketone or the like.

Among the specific examples of the chemical substances represented by the formula (I) or the formula (II), N'-(1-methylethylidene)salicylic hydrazide, N'-(1-methylpropylidene)salicylic hydrazide, N'-(1,3-dimethylbutylidene)salicylic hydrazide, and N'-(2-furylmethylene)salicylic hydrazide are preferred from the viewpoints of easiness of synthesis, cost and efficient dispersion of carbon black.

Also, among the specific examples of the above-mentioned formula (II), 1-hydroxy-N'-(1-methylethylidene)-2-naphthoic hydrazide, 1-hydroxy-N'-(1-methylpropylidene)-2 -naphthoic hydrazide, 1-hydroxy-N'-(1,3-dimethylbutylidene)-2-naphthoic hydrazide, 1-hydroxy-N'-(2-furylmethylene)-2-naphthoic hydrazide, 3-hydroxy-N'-(1-methylethylidene)-2-naphthoic hydrazide, 3-hydroxy-N'-(1-methylpropylidene)-2-naphthoic hydrazide, 3-hydroxy-N'-(1,3-dimethylbutylidene)-2-naphthoic hydrazide, and 3-hydroxy-N '-(2-furylmethylene)-2-naphthoic hydrazide are preferred.

The compounds represented by the above formula (I) or formula (II) may be used alone or in combination of two or more.

The content of the hydrazide compound in the rubber composition is preferably 0.1 to 2.5 parts by mass, more preferably 0.1 to 2 parts by mass, still more preferably 0.5 to 2 parts by mass, relative to 100 parts by mass of the rubber components, from the view point of efficiently dispersing carbon black, with the intramolecular functional group having high affinity not only with carbon black but also with the rubber components.

With a content of the hydrazide compound in the above range, the effect of efficiently dispersing carbon black tends to be easily exhibited.

[Crosslinking agent]

It is preferable that a crosslinking agent be contained in the rubber composition for a tire tread.

Examples of the crosslinking agent include a sulfur-based crosslinking agent (vulcanizing agent), an organic peroxide-based crosslinking agent, an inorganic crosslinking agent, a polyamine crosslinking agent, a resin crosslinking agent, and an oxime-nitrosamine-based crosslinking agent. Among these, a sulfur-based crosslinking agent (vulcanizing agent) is preferred, and sulfur is more preferred.

The crosslinking agents may be used alone, or two or more types thereof may be used in combination.

The content of the crosslinking agent in the rubber composition is preferably 0.1 to 20 parts by mass, more preferably 0.1 to 10 parts by mass, still more preferably 0.5 to 5 parts by mass, relative to 100 parts by mass of the rubber components, from the viewpoints of allowing the crosslinking to sufficiently proceed and suppressing the crosslinking during kneading.

[Other components]

The rubber composition for a tire tread may contain, in addition to the components described above, a vulcanization accelerator, a wax, an antiaging agent, a reinforcing agent, a softener, a vulcanization aid, a coloring agent, a flame retardant, a lubricant, a foaming agent, a plasticizer, a processing aid, an antioxidant, a scorch inhibitor, an ultraviolet absorber, an antistatic agent, or a coloring inhibitor in an amount corresponding to a purpose, for appropriate use on an as needed basis.

[Tire with use of rubber composition for tire tread in tread]

As described above, the rubber composition for a tire tread comprises a rubber components comprising 70 mass% or more of natural rubber, one selected from the group consisting of zinc oxide, a fatty acid and a fatty acid zinc in a total content of 2 parts by mass or more and less than 13 parts by mass relative to 100 parts by mass of the rubber components, a filler comprising carbon black, a carbon black dispersant, and other components on an as needed basis.
The rubber composition for a tire tread is then prepared by kneading, using a kneading machine such as a Banbury mixer, a roll, an internal mixer, and a kneader. The kneading conditions for the kneading machine such as the kneading temperature and the kneading time may be appropriately selected depending on the purpose.
The tire of the present invention is not particularly limited so long as the rubber composition for a tire tread specified in the present invention is used in the structure of the tread portion as described above, and a known structure may be used in other than the tread portion.
Also, the manufacturing method of the tire of the present invention is not particularly limited, and the tire may be manufacture by a conventional method.
In an example, members used for manufacturing a normal tire such as an inner liner, a carcass, a bead portion and a belt are sequentially laminated on a drum; a tread portion made of the rubber composition for a tire tread specified in the present invention is further laminated thereon; and the drum is removed to make a green tire.
Subsequently, the green tire is heated and vulcanized by a conventional method, so that a desired tire can be manufactured.

Examples

The present invention is further specifically described with reference to the following Examples, though the present invention is not limited thereto.

[Examples 1 to 13 and Comparative Examples 1 to 9]

According to composition formulations shown in the following Tables 1 and 2, rubber compositions in Examples 1 to 13 and Comparative Examples 1 to 9 are prepared by kneading with a Banbury mixer, respectively, so that radial tires for aircraft (size: 50$\times$20.0 R22_32PR) are manufactured.

[Evaluation method]

(1) Measurement of aggregate

A tire manufactured as described above is cut in a direction perpendicular to the circumferential direction of the tire, and the amount of aggregates present on the cut surface is measured by a dispergrader in accordance with ASTM D7723.
The resolution of the dispergrader is selected to be 3 $\mu$m, and a portion where an aggregate larger than the resolution is present is observed as a white area having an area corresponding to the size of the aggregate.
In a unit area, the percentage of the areas occupied by the white areas is taken as white area %.
Note that, the percentage of the areas occupied by aggregates of 32 $\mu$m or more refers to:
(White area%) $\times$ (Integrated value of white areas with a particle size of 32 $\mu$m or more)/(Integrated value of white areas with a particle size of 3 to 57 $\mu$m).

(2) Abrasion resistance test

From the center rib of a radial tire for aircrafts manufactured as described above, a sheet-shaped rubber plate having a thickness of 5 mm is cut out to make each of the test pieces.
In accordance with JIS K 6264-1993, Lambourn abrasion test is performed under the following conditions at a

maximum temperature of the surface of a test piece of 220±10°C, so as to measure the abrasion loss of each test piece.

Dimensions of test piece: diameter×thickness=49.0 mm×5.0 mm
Rotation speed of test piece: 200 rpm
Rotation speed of test road surface: 20 rpm
Test load: 7 kgf
Test time: 16 seconds
Ambient temperature: 25°C

Assuming an abrasion resistance index of 100 for Comparative Example 7, the abrasion loss of each test piece and the abrasion loss of the test piece in Comparative Example 7 are substituted into the following equation to calculate the abrasion loss index of each test piece.

$$\text{Abrasion resistance index} = (\text{Abrasion loss of test piece in Comparative example 7/Abrasion loss of other test piece}) \times 100$$

It can be evaluated that the larger the abrasion resistance index is, the more excellent abrasion resistance a tire has.

(3) Crack resistance test

From the center rib of a radial tire for aircrafts manufactured as described above, a sheet having a thickness of 2 mm is cut out to make each of the test pieces.

A 0.5-mm scratch is made in the center of the test piece, and both ends of the test piece are grasped to perform a fracture test under the following conditions. The number of times until each test piece fractures is measured.

Shape of test piece: JIS dumbbell shape No. 5
Distance between gauge marks: 30.0 mm
Test stress: 1.5 N (maximum), 0 N (minimum)
Frequency: 5 Hz
Ambient temperature: 80°C

Assuming a crack resistance index of 100 for Comparative Example 7, the number of times for fracture of each test piece and the number of times for fracture of the test piece in Comparative Example 7 are substituted into the following equation to calculate the crack resistance index of each test piece.

$$\text{Crack resistance index} = (\text{Number of times until the test piece in Comparative Example 7 fractures/Number of times until other test piece fractures}) \times 100$$

It can be evaluated that the smaller the crack resistance index is, the more excellent crack resistance a tire has.

(4) Resistance to heat generation test

A radial tire for aircrafts manufactured as described above is attached to the rim of a wheel, which is then attached to a drum tester. The internal pressure at the start of the test is set at 1530 kPa, and the load at the start of the test is set at 20870 kg. After being subjected to the following speed condition and the following load condition, the temperature increase (°C) is measured.

<Speed condition>

The speed is accelerated from 0 km/h at the start of the test to 360 km/h in 65 seconds.

<Loading condition>

The load conditions are assumed to be those of the takeoff of an aircraft, and the load is set to 0 after 65 seconds from the start of the test.

Note that the measurement of the temperature increase (°C) is performed at a depth of 20 mm at the center in the width direction of the shoulder portion of a tire.

It can be evaluated that the smaller the temperature increase (°C) is, the more excellent resistance to heat generation a tire has.

Table 1

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Summary of compounding rubber composition for tire tread | | | | | | | | | | | | | | |
| Rubber components | Natural rubber *1 | 70 | 70 | 70 | 70 | 70 | 70 | 70 | 70 | 70 | 85 | 85 | 85 | 85 |
| | Butadiene rubber *2 | 30 | 30 | 30 | 30 | 30 | 30 | 30 | 30 | 30 | 15 | 15 | 15 | 15 |
| Zinc oxide | Zinc flower | 5 | 5 | 5 | 3.5 | 3.5 | 3.5 | 3.5 | 3.5 | 5 | 5 | 3.5 | 3.5 | 3.5 |
| Fatty acid | Stearic acid | 3 | 3 | 0 | 0 | 0 | 0 | 0 | 0 | 3 | 3 | 0 | 0 | 0 |
| Fatty acid zinc *16 | | 0 | 0 | 3 | 2.1 | 2.1 | 2.1 | 2.1 | 2.1 | 0 | 0 | 2.1 | 2.1 | 2.1 |
| Fatty acid+Zinc oxide+Fatty acid zinc | | 8 | 8 | 8 | 5.6 | 5.6 | 5.6 | 5.6 | 5.6 | 8 | 8 | 5.6 | 5.6 | 5.6 |
| Zinc oxide/Fatty acid zinc | | 0 | 0 | 1.7 | 1.7 | 1.7 | 1.7 | 1.7 | 1.7 | 0 | 0 | 1.7 | 1.7 | 1.7 |
| Filler | Carbon black *3 | 40 | 40 | 40 | 40 | 40 | 40 | 40 | 40 | 40 | 40 | 40 | 40 | 40 |
| | Silica 1 *4 | - | - | - | - | 10 | - | - | - | 10 | - | 10 | 10 | 10 |
| | Silica 2 *5 | - | - | - | - | - | 10 | - | - | - | - | - | - | - |
| | Silica 3 *6 | - | - | - | - | - | - | 10 | - | - | - | - | - | - |
| | Silica 4 *7 | - | - | - | - | - | - | - | 10 | - | - | - | - | - |
| Carbon black dispersant | Hydrazide compound *8 | 0.1 | 1 | 1 | 1 | 1 | 1 | 1 | 1 | 2 | 1 | 1 | 2 | 2 |
| Silane coupling agent *9 | | - | - | - | - | - | - | - | - | - | - | - | - | 1 |
| Anti-aging agent *10 | | 1 | 1 | 1 | 1 | 1 | 1 | 1 | 1 | 1 | 1 | 1 | 1 | 1 |
| Anti-aging agent (TMDQ) *11 | | 0.3 | 0.3 | 0.3 | 0.3 | 0.3 | 0.3 | 0.3 | 0.3 | 0.3 | 0.3 | 0.3 | 0.3 | 0.3 |
| Wax *12 | | 1 | 1 | 1 | 1 | 1 | 1 | 1 | 1 | 1 | 1 | 1 | 1 | 1 |
| Vulcanization accelerator (CBS) *13 | | 1 | 1 | 1 | 1 | 1 | 1 | 1 | 1 | 1 | 1 | 1 | 1 | 1 |
| Sulfur | | 2 | 2 | 2 | 2 | 2 | 2 | 2 | 2 | 2 | 2 | 2 | 2 | 2 |
| Total (part) | | 153.4 | 154.3 | 154.3 | 151.9 | 161.9 | 161.9 | 161.9 | 161.9 | 165.3 | 154.3 | 161.9 | 162.9 | 163.9 |
| Vulcanized rubber of rubber composition for tire tread | | | | | | | | | | | | | | |
| Amount of zinc (part) | | 4.0 | 4.0 | 4.4 | 3.1 | 3.1 | 3.1 | 3.1 | 3.1 | 4.0 | 4.0 | 3.1 | 3.1 | 3.1 |
| Amount of fatty acid (part) *14 | | 3.0 | 3.0 | 2.6 | 1.8 | 1.8 | 1.8 | 1.8 | 1.8 | 3.0 | 3.0 | 1.8 | 1.8 | 1.8 |
| Amount of zinc/Amount of fatty acid | | 1.3 | 1.3 | 1.7 | 1.7 | 1.7 | 1.7 | 1.7 | 1.7 | 1.3 | 1.3 | 1.7 | 1.7 | 1.7 |
| Total amount of vulcanization accelerators (part) *15 | | 8 | 8 | 8 | 5.6 | 5.6 | 5.6 | 5.6 | 5.6 | 8 | 8 | 5.6 | 5.6 | 5.6 |
| Evaluation result | | | | | | | | | | | | | | |
| Proportion of aggregate having particle size of 32 μm or more (%) | | 12 | 12 | 9 | 7 | 6 | 5 | 6 | 4 | 10 | 12 | 6 | 6 | 6 |
| Crack resistance (index) | | 98 | 96 | 86 | 85 | 82 | 81 | 82 | 80 | 93 | 90 | 78 | 75 | 73 |
| Abrasion resistance (index) | | 102 | 104 | 114 | 115 | 118 | 120 | 116 | 121 | 105 | 110 | 125 | 130 | 132 |

(continued)

| | | | | | | | | | | | | | |
|---|---|---|---|---|---|---|---|---|---|---|---|---|---|
| Evaluation result | | | | | | | | | | | | | |
| Resistance to heat generation (temperature increase (°C)) | 60 | 59 | 57 | 57 | 56 | 56 | 56 | 56 | 58 | 57 | 55 | 54 | 54 |

Table 2

| | | Comparative Example | | | | | | | | |
|---|---|---|---|---|---|---|---|---|---|---|
| | | 1 | 2 | 3 | 4 | 5 | 6 | 7 | 8 | 9 |
| Summary of compounding rubber composition for tire tread | | | | | | | | | | |
| Rubber components | Natural rubber *1 | 55 | 55 | 55 | 55 | 70 | 70 | 70 | 70 | 70 |
| | Butadiene rubber *2 | 45 | 45 | 45 | 45 | 30 | 30 | 30 | 30 | 30 |
| Zinc oxide | Zinc flower | 5 | 3.5 | 5 | 5 | 1 | 8.5 | 5 | 1 | 8.5 |
| Fatty acid | Stearic acid | 3 | 0 | 3 | 3 | 0.6 | 5.1 | 3 | 0.6 | 5.1 |
| Fatty acid zinc *16 | | 0 | 2.1 | 0 | 0 | 0 | 0 | 0 | 0 | 0 |
| Fatty acid+Zinc oxide+Fatty acid zinc | | 8 | 5.6 | 8 | 8 | 1.6 | 13.6 | 8 | 1.6 | 13.6 |
| Zinc oxide/Fatty acid zinc | | 0 | 1.7 | 0 | 0 | 0 | 0 | 0 | 0 | 0 |
| Filler | Carbon black *3 | 40 | 40 | 40 | 40 | 40 | 40 | 40 | 50 | 60 |
| | Silica 1 *4 | - | - | 10 | - | - | - | - | 10 | - |
| | Silica 2 *5 | - | - | - | - | - | - | - | - | - |
| | Silica 3 *6 | - | - | - | - | - | - | - | - | - |
| | Silica 4 *7 | - | - | - | - | - | - | - | - | - |
| Carbon black dispersant | Hydrazide compound *8 | 0.1 | 1 | 1 | 2 | 1 | 1 | 0 | 1 | 1 |
| Silane coupling agent *9 | | - | - | - | - | - | - | - | - | - |
| Anti-aging agent *10 | | 1 | 1 | 1 | 1 | 1 | 1 | 1 | 1 | 1 |
| Anti-aging agent (TMDQ) *11 | | 0.3 | 0.3 | 0.3 | 0.3 | 0.3 | 0.3 | 0.3 | 0.3 | 0.3 |
| Wax *12 | | 1 | 1 | 1 | 1 | 1 | 1 | 1 | 1 | 1 |
| Vulcanization accelerator (CBS) *13 | | 1 | 1 | 1 | 1 | 1 | 1 | 1 | 1 | 1 |
| Sulfur | | 2 | 2 | 2 | 2 | 2 | 2 | 2 | 2 | 2 |
| Total (part) | | 128.4 | 126.9 | 139.3 | 130.3 | 147.9 | 159.9 | 153.3 | 167.9 | 156.3 |
| Vulcanized rubber of rubber composition for tire tread | | | | | | | | | | |
| Amount of zinc (part) | | 4.0 | 3.1 | 4.0 | 4.0 | 0.8 | 6.8 | 4.0 | 0.8 | 6.8 |
| Amount of fatty acid (part) *14 | | 3.0 | 1.8 | 3.0 | 3.0 | 0.6 | 5.1 | 3.0 | 0.6 | 5.1 |
| Amount of zinc/Amount of fatty acid | | 1.3 | 1.7 | 1.3 | 1.3 | 1.3 | 1.3 | 1.3 | 1.3 | 1.3 |
| Total amount of vulcanization accelerators (part) *15 | | 8 | 5.6 | 8 | 8 | 1.6 | 13.6 | 8 | 1.6 | 13.6 |

(continued)

| Evaluation result | | | | | | | | | |
|---|---|---|---|---|---|---|---|---|---|
| Proportion of aggregate having particle size of 32 μm or more (%) | 12 | 10 | 10 | 11 | 6 | 16 | 10 | 12 | 15 |
| Crack resistance (index) | 115 | 101 | 113 | 112 | 108 | 103 | 100 | 101 | 105 |
| Abrasion resistance (index) | 85 | 99 | 87 | 88 | 92 | 97 | 100 | 94 | 98 |
| Resistance to heat generation (temperature increase (°C)) | 63 | 60 | 62 | 62 | 62 | 61 | 60 | 65 | 64 |

In Table 1 and Table 2 described above, *1 to *15 are as follows.

*1 Natural rubber: RSS #3
*2 Butadiene rubber: trade name "UBE POL-150L" manufactured by Ube Industries, Ltd.
*3 Carbon black: trade name "VULCAN 6 SHOBLACK" manufactured by Cabot Corporation
*4 Silica 1: trade name "ULTRASIL 9500GR" manufactured by Evonik Industries AG, CTAB: 220 $m^2/g$
*5 Silica 2: silica obtained in Synthesis Example 1 shown below, CTAB: 191 $m^2/g$, BET surface area: 245 $m^2/g$
*6 Silica 3: trade name "Nipsil AQ" manufactured by Tosoh Silica Corporation, CTAB: 165 $m^2/g$, BET surface area: 195 $m^2/g$
*7 Silica 4: silica obtained in Synthesis Example 2 shown below, CTAB: 79 $m^2/g$
*8 Hydrazide compound: 3-hydroxy-N'-(1,3-dimethylbutylidene)-2-naphthoic hydrazide
*9 Silane coupling agent: trade name "ABC-856" manufactured by Shin-Etsu Chemical Co., Ltd., bistriethoxy silylpropyl polysulfide
*10 Anti-aging agent: trade name "Nocrac 6C" manufactured by Ouchi Shinko Chemical Industrial Co., Ltd.
*11 Anti-aging agent (TMDQ): trade name "Nonflex RD" manufactured by Seiko Chemical Co., Ltd.
*12 Wax: trade name "Suntight A" manufactured by Seiko Chemical Co., Ltd.
*13 Vulcanization accelerator (CBS): trade name "Sanceller CM-G" manufactured by Sanshin Chemical Industry Co., Ltd.
*14 The amount of fatty acid includes the amount of fatty acid component of a fatty acid zinc.
*15 The vulcanization accelerator represents the total content of zinc oxide, a fatty acid and a fatty acid zinc.
*16 Fatty acid zinc: trade name "Aktiplast PP" manufactured by Rhine Chemie Corporation, (main components: zinc oleate and zinc palmitate)

(Synthesis Example 1) Silica 2

In a 180-L jacketed stainless steel reaction vessel equipped with a stirrer, 89 L of water and 1.70 L of an aqueous solution of sodium silicate ($SiO_2$: 160 g/L, $SiO_2/Na_2O$ molar ratio: 3.3) are placed to be heated to 75°C. The concentration of $Na_2O$ in the solution produced was 0.015 mol/L.

While maintaining the temperature of the solution at 75°C, the same sodium silicate aqueous solution as described above and a sulfuric acid (18 mol/L) are simultaneously added dropwise at a flow rate of 520 mL/min and at a flow rate of 23 mL/min, respectively. While adjusting the flow rates, the neutralization reaction is performed, with the $Na_2O$ concentration in the reaction solution being maintained in the range of 0.005 to 0.035 mol/L. In the middle of the reaction, the reaction solution begins to become cloudy during the course of the reaction, and after a lapse of 46 minutes a gel-like solution with an increased viscosity is formed. Further, the addition was continued, and the reaction was stopped after a lapse of 100 minutes. The concentration of silica in the solution produced is 60 g/L. Subsequently, the same sulfuric acid as described above is added until the pH of the solution reached 3 to obtain a silicic acid slurry. The silicic acid slurry produced is filtered with a filter press and washes to obtain a wet cake. From the wet cake, a slurry is made using an emulsifying device and dried with a spray dryer to obtain a silica 2.

(Synthesis Example 2) Silica 4

In a 180-L jacketed stainless steel reaction vessel equipped with a stirrer, 65 L of water and 1.25 L of an aqueous solution of sodium silicate ($SiO_2$: 160 g/L, $SiO_2/Na_2O$ molar ratio: 3.3) are placed to be heated to 96°C. The concentration of $Na_2O$ in the solution produced is 0.015 mol/L.

While maintaining the temperature of the solution at 96°C, the same sodium silicate aqueous solution as described above and a sulfuric acid (18 mol/L) are simultaneously added dropwise at a flow rate of 750 mL/min and at a flow rate of 33 mL/min, respectively. While adjusting the flow rates, the neutralization reaction is performed, with the $Na_2O$ concentration in the reaction solution being maintained in the range of 0.005 to 0.035 mol/L. In the middle of the reaction, the reaction solution begins to become cloudy during the course of the reaction, and after a lapse of 30 minutes a gel-like solution with an increased viscosity is formed. Further, the addition is continued, and the reaction is stopped after a lapse of 100 minutes. The concentration of silica in the solution produced is 85 g/L. Subsequently, the same sulfuric acid as described above is added until the pH of the solution reached 3 to obtain a silicic acid slurry. The silicic acid slurry produced is filtered with a filter press and washes to obtain a wet cake. From the wet cake, a slurry is made using an emulsifying device and dried with a spray dryer to obtain a silica 4.

(Summary of results)

From the evaluation results described in Table 1 and Table 2, the following can be understood.
It is shown that the tires in Comparative Examples 1 to 4 tend to be inferior in crack resistance and abrasion resistance, and tend to have a relatively high temperature increase in the resistance to heat generation test, due to the content of natural rubber in the rubber composition for a tire tread being less than the specific range.
It is also shown that the tires in Comparative Examples 5, 6, 8 and 9 tend to be inferior in crack resistance and abrasion resistance, and tend to have a relatively high temperature increase in the resistance to heat generation test, due to the total amount of zinc oxide, a fatty acid and a fatty acid zinc in the rubber composition for a tire tread is out of the specified range.
It is also shown that the tire in Comparative Example 7 is inferior in crack resistance and abrasion resistance due to the rubber composition for a tire tread not comprising a carbon black dispersant.
In contrast, it is shown that the tires in Examples 1 to 13 are excellent in the crack resistance, the abrasion resistance and the resistance to heat generation, due to the rubber composition for a tire tread comprising a natural rubber in a specified amount or more, at least one selected from the group consisting of zinc oxide, a fatty acid and a fatty acid zinc in a specified total amount, and a carbon black dispersant.

## Claims

1. A rubber composition for a tire tread comprising:

    rubber components comprising 70 mass% or more of natural rubber,
    at least one selected from the group consisting of zinc oxide, a fatty acid, and a fatty acid zinc in a total amount of 2 parts by mass or more and less than 13 parts by mass relative to 100 parts by mass of the rubber components,
    a filler comprising carbon black, and
    a carbon black dispersant,
    wherein a vulcanized rubber of the rubber composition has an integrated value of white areas with a particle size of 32 μm or more, of 15% or less of the integrated value of white areas with a particle size of 3 to 57 μm, in measurement of a cross section using a dispergrader in accordance with ASTM D7723.

2. The rubber composition for a tire tread according to claim 1, wherein the value of (White area %) × (Integrated value of white area with a particle size of 32 μm or more)/(Integrated value of white area with a particle size of 3 to 57 μm) is 0.2% or less in the measurement of a cross section of the vulcanized rubber.

3. The rubber composition for a tire tread according to claim 1 or 2, wherein
    a content of the filler is 1 to 60 parts by mass relative to 100 parts by mass of the rubber components, and
    the filler comprises 1 to 20 mass% of inorganic particles having a cetyltrimethylammonium bromide adsorption specific surface area (CTAB) in a range of 50 to 350 $m^2/g$.

4. The rubber composition for a tire tread according to claim 3, wherein the inorganic particles comprise silica.

5. The rubber composition for a tire tread according to any one of claims 1 to 4, wherein a content of the fatty acid zinc is 1 part by mass or more relative to 100 parts by mass of the rubber components.

6. The rubber composition for a tire tread according to any one of claims 1 to 5, wherein the carbon black dispersant is a hydrazide compound.

**7.** The rubber composition for a tire tread according to claim 6, wherein a content of the hydrazide compound is 0.1 to 2.5 parts by mass relative to 100 parts by mass of the rubber components.

**8.** The rubber composition for a tire tread according to any one of claims 1 to 7, wherein a mass ratio of a content of the zinc oxide b to a content of the fatty acid zinc a, b/a, is 1.0 to 3.0.

**9.** The rubber composition for a tire tread according to any one of claims 1 to 8, wherein a mass ratio of an amount of zinc d to an amount of fatty acid c comprised in the vulcanized rubber, d/c, is 1.1 or more and 2.0 or less.

**10.** The rubber composition for a tire tread according to any one of claims 1 to 9, wherein a content of the natural rubber in the rubber components is 70 to 95 mass%.

**11.** A tire using a tread of the rubber composition for a tire tread according to any one of claims 1 to 10.

**INTERNATIONAL SEARCH REPORT**

International application No. PCT/JP2018/045503

A. CLASSIFICATION OF SUBJECT MATTER
Int.Cl. C08L7/00(2006.01)i, B60C1/00(2006.01)i, C08K3/04(2006.01)i, C08K3/22(2006.01)i, C08K3/36(2006.01)i, C08K5/092(2006.01)i, C08K5/098(2006.01)i, C08K5/24(2006.01)i

According to International Patent Classification (IPC) or to both national classification and IPC

B. FIELDS SEARCHED

Minimum documentation searched (classification system followed by classification symbols)
Int.Cl. C08L7/00, B60C1/00, C08K3/04, C08K3/22, C08K3/36, C08K5/092, C08K5/098, C08K5/24

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-91715 A (BRIDGESTONE CORPORATION) 25 March 2004, paragraph [0007], example 4 & US 2005/0250883 A1, paragraph [0013], example 4 & WO 2004/026954 A1 & EP 1535961 A1 | 1-11 |
| X | JP 2004-123926 A (BRIDGESTONE CORPORATION) 22 April 2004, paragraphs [0007], [0009], example 1 (Family: none) | 1-11 |

☒ Further documents are listed in the continuation of Box C. ☐ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| 04 March 2019 (04.03.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/045503

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-265431 A (BRIDGESTONE CORPORATION) 25 November 2010, claims 1-11, paragraphs [0008], [0013], example 8 (Family: none) | 1-11 |
| Y | JP 2005-232407 A (BRIDGESTONE CORPORATION) 02 September 2005, claims 1, 4, paragraphs [0004], [0021], example 1 (Family: none) | 1-11 |
| Y | JP 2009-101920 A (BRIDGESTONE CORPORATION) 14 May 2009, claims 1, 2, paragraphs [0007], [0022], [0031], example 6 (Family: none) | 1-11 |
| Y | JP 2005-41975 A (BRIDGESTONE CORPORATION) 17 February 2005, claims 1-15, paragraph [0008], example 2 (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010265431 A
- JP 4020579 A